# EUROPÄISCHE PATENTSCHRIFT

(11) **EP 0 917 999 B1**
(45) Veröffentlichungstag und Bekanntmachung des Hinweises auf die Patenterteilung: **08.06.2005**
(21) Anmeldenummer: 98122112.0
(22) Anmeldetag: 23.11.1998
(51) Int. Cl.: B60R 22/34, B60R 22/36

(54) **Gurtaufroller zum Einbau in eine umlegbare Rückenlehne**
Seat belt retractor for fitting to the back of a folding seat
Enrouleur de ceinture de sécurité à monter dans le dossier rabattable d'un siège

(30) Priorität: 24.11.1997 DE 29720818 U
(43) Veröffentlichungstag der Anmeldung: 26.05.1999
(73) Patentinhaber: TRW Automotive GmbH, 73553 Alfdorf (DE)
(72) Erfinder: Rink, Jürgen, 73550 Waldstetten (DE)
(74) Vertreter: Degwert, Hartmut, Dipl.-Phys.

(56) Entgegenhaltungen:
- WO-A-98/49035
- DE-A- 2 927 159
- DE-U- 29 720 817
- DE-U- 29 800 709
- PATENT ABSTRACTS OF JAPAN vol. 017, no. 414 (M-1456), 3. August 1993 (1993-08-03) & JP 05 085304 A (MAZDA MOTOR CORP), 6. April 1993 (1993-04-06)

## Beschreibung

Die Erfindung betrifft einen Gurtaufroller zum Einbau in eine umlegbare Rückenlehne gemäß dem Oberbegriff des Anspruchs 1.

Wenn der Gurtaufroller nicht direkt am Fahrzeugaufbau, sondern an einer Rückenlehne befestigt ist, werden die Gurtkräfte über die Rückenlehne und ihre Verankerung in den Fahrzeugaufbau eingeleitet. Eine umlegbare Rückenlehne muß am Fahrzeugaufbau verrastet sein, damit sie die Gurtkräfte aufnehmen und in den Fahrzeugaufbau weiterleiten kann. Die Verrastung einer umlegbaren Rückenlehne am Fahrzeugaufbau erfolgt mittels eines Schlosses, das bei Erreichen der aufrechten Gebrauchsposition der Rückenlehne automatisch einrastet. Bei einem nicht oder nicht vollständig eingerasteten Schloß kann der Sicherheitsgurt seine Rückhaltefunktion nicht erfüllen, weshalb eine Aktivierung des Blockiermechanismus des Gurtaufrollers sinnvoll ist, solange die Rückenlehne nicht durch Einrasten des Schlosses verriegelt ist. Bei aktiviertem Blockiermechanismus kann kein Gurtband vom Gurtaufroller abgezogen werden. Der Sicherheitsgurt kann daher nicht angelegt werden, solange die Rückenlehne nicht am Fahrzeugaufbau verriegelt ist. Der Fall, daß der Sicherheitsgurt zwar angelegt ist, tatsächlich jedoch keine Rückhaltewirkung erzielt werden kann, weil die Rückenlehne nicht verriegelt ist, kann dann nicht auftreten.

Aus der JP 5085304 A und der DE 29 27 159 A sind Gurtaufroller der eingangs genannten Art bekannt, bei denen das Abwickeln des Gurtbandes von der Gurtspule verhindert wird, solange die Rückenlehne nicht verriegelt ist.

Die Erfindung schafft einen Gurtaufroller, mit dem ohne großen konstruktionellen Aufwand eine Blockierung der Gurtspule bei nicht eingerastetem Rückenlehnenschloß auf effektive Weise ermöglicht wird. Dies wird gemäß der Erfindung mit einem Gurtaufroller der eingangs genannten Art erreicht, der die kennzeichnenden Merkmale des Anspruchs 1 aufweist.

Bei dem Gurtaufroller ist der Blockiermechanismus mit einer fahrzeugsensitiven Ansteuereinrichtung versehen, die in an sich bekannter Weise eine an der Gurtspule angeschlossene Kupplungsscheibe, die eine Kupplungsverzahnung trägt, und eine in die Kupplungsverzahnung einsteuerbare Kupplungsklinke aufweist. Die Kupplungsklinke wird in bekannter Weise durch einen Trägheitssensor angehoben und in die Kupplungsverzahnung eingesteuert. Zusätzlich ist die Kupplungsklinke mit einem Steueransatz versehen, der durch ein Zugmittel mit dem Schloß an der Rückenlehne gekoppelt ist. Die ohnehin vorhandene Kupplungsklinke wird so auch zur vom Schloßzustand abhängigen Verriegelung des Gurtaufrollers genutzt. Vorhandene und bewährte Aufrollerkonstruktionen können daher leicht mit der erfindungsgemäßen Sperrfunktion ausgerüstet werden.

In Weiterbildung der Erfindung ist vorgesehen, daß durch das Zugmittel ein auf den Steueransatz der Kupplungsklinke einwirkender Betätigungshebel verschwenkt wird. Dieser Betätigungshebel ist zwischen zwei Druckfedern angeordnet, von denen die erste an einem auf dem freien Ende des Zugmittels befestigten Endstück und die zweite an einem das Zugmittel umgebenden Mantel abgestützt ist. Durch die Anordnung des Betätigungshebels zwischen zwei Druckfedern wird ein Überhub des Zugmittels zugelassen, wodurch Toleranzen ausgeglichen werden und auf eine Justierung verzichtet werden kann.

Weitere Merkmale und Vorteile der Erfindung ergeben sich aus der folgenden Beschreibung einer Ausführungsform der Erfindung und aus der Zeichnung, auf die Bezug genommen wird. In der Zeichnung zeigen:
Figur 1 eine schematische Darstellung eines Fahrzeugsitzes mit dem erfindungsgemäßen Gurtaufroller,
Figur 2 eine perspektivische Teilansicht eines Blockiermechanismus des Gurtaufrollers,
Figur 3 eine Perspektivansicht des erfindungsgemäßen Gurtaufrollers in teilweise geschnittener Darstellung bei eingerasteter Rückenlehne, und
Figur 4 den Gurtaufroller der Figur 2 bei nicht eingerasteter Rückenlehne.

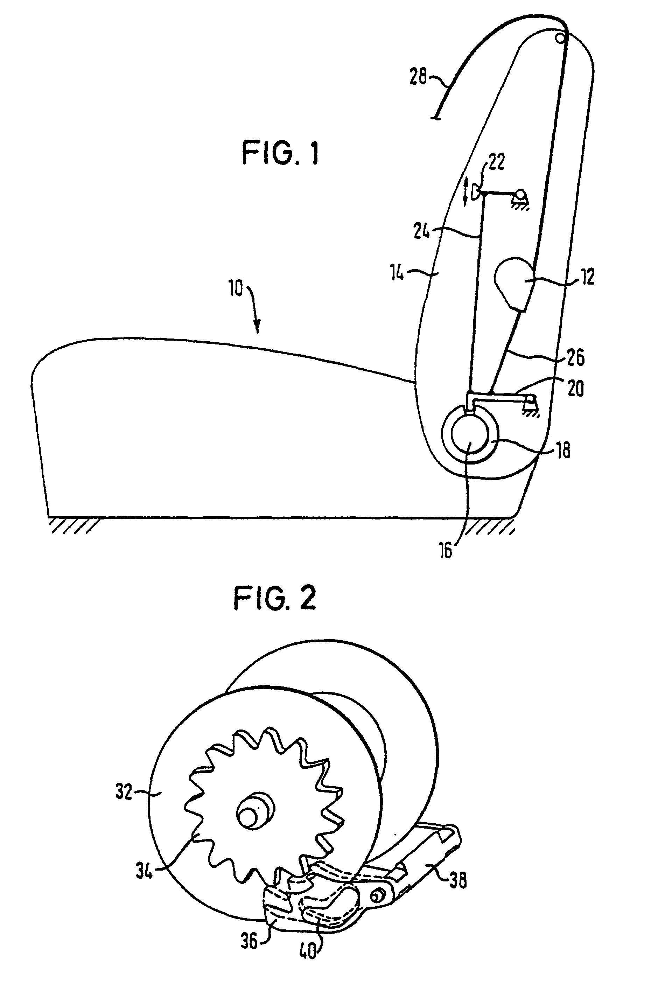

Die schematische Darstellung der Figur 1 zeigt einen Fahrzeugsitz 10 mit einem erfindungsgemäßen Gurtaufroller 12. Der Gurtaufroller 12 ist in der Rückenlehne 14 des Fahrzeugsitzes 10 angeordnet, die über ein Drehgelenk 16 mit dem Sitzteil und damit dem Fahrzeugaufbau verbunden ist. Die Rückenlehne 14 kann um das Drehgelenk 16 geklappt werden und wird in ihrer in der Figur 1 dargestellten aufrechten Gebrauchsposition durch ein Schloß verriegelt. Das Schloß ist schematisch durch eine Scheibe 18, die konzentrisch um das Drehgelenk 16 angeordnet ist und fest mit dem Sitzteil verbunden ist, und ein bewegliches Funktionsteil, eine Schloßfalle 20, angedeutet. Die Scheibe 18 weist eine Ausnehmung auf, in die die an der Rückenlehne 14 schwenkbar gelagerte Schloßfalle 20 eingreift. Die Rückenlehne 14 kann entriegelt und nachfolgend umgeklappt werden, indem die Schloßfalle 20 aus der Ausnehmung der Scheibe 18 herausbewegt wird. Dies erfolgt durch einen Entriegelungshebel 22, der mit der Schloßfalle über einen Kabelzug 24 in Verbindung steht. Die Schloßfalle 20 ist als Hebel ausgebildet, an dessen freiem Ende sowohl der Kabelzug 24 als auch ein Kabelzug 26, der mit dem Gurtaufroller 12 in Verbindung steht, angreift. Wird die Schloßfalle 20 durch eine Aufwärtsbewegung des Entriegelungshebels 22 aus der Ausnehmung der Scheibe 18 bewegt, wird gleichzeitig durch die Entlastung des Kabelzugs 26 der Blockiermechanismus des Gurtaufrollers 12 aktiviert. Wenn sich die Schloßfalle 20 nicht in der Ausnehmung der Scheibe 18 befindet, kann somit kein Gurtband 28 vom Gurtaufroller 12 abgezogen werden.

Der Gurtaufroller 12 weist einen Rahmen 30 auf, in dem eine, in der Figur 2 dargestellte, Gurtspule 32 drehbar gelagert ist. Die Gurtspule 32 weist an jedem ihrer seitlichen Flansche eine Sperrverzahnung 34 auf, in die jeweils eine von zwei Sperrklinken 36 eingreifen kann. Die Sperrklinken 36 sind, wie in der Figur 2 zu erkennen ist, durch einen Steg 38 miteinander verbunden, und sie sind am Rahmen 30 des Gurtaufrollers 12 schwenkbar gelagert. Um die Sperrklinken 36 in die Sperrverzahnung 34 einzusteuern, ist ein fahrzeugsensitiver Ansteuermechanismus vorgesehen. Der fahrzeugsensitive Ansteuermechanismus greift mit einem (nicht gezeigten) Steuerhebel in eine Steuerkulisse 40 an der Seite einer der Klinken 36 ein.

Der fahrzeugsensitive Ansteuermechanismus besteht im wesentlichen aus einer an der Gurtspule drehfest angeschlossenen, außenverzahnten Kupplungsscheibe 42, einem Trägheitssensor in Form einer Massekugel 44 und einer Kupplungsklinke 46, die auf der Massekugel 44 aufliegt und schwenkbar gelagert ist. Die Kupplungsklinke 46 kann durch die Massekugel 44 in die Kupplungsverzahnung am Außenumfang der Kupplungsscheibe 42 eingesteuert werden.

An der Kupplungsklinke 46 ist ein seitlich abragender Steueransatz 48 angebracht. Ein um eine Achse 50 schwenkbar gelagerter Betätigungshebel 52 wirkt an seinem freien Ende mit dem Steueransatz 48 zusammen. Der Betätigungshebel 52 ist zwischen zwei Druckfedern 54, 56 angeordnet. Die Druckfeder 54 ist zwischen dem Betätigungshebel 52 und einem am Ende des Zugseils 58 des Kabelzuges 26 angebrachten Endstück 60 abgestützt. Die Druckfeder 56 ist zwischen dem Betätigungshebel 52 und dem Mantel 62 des Kabelzugs 26 abgestützt.

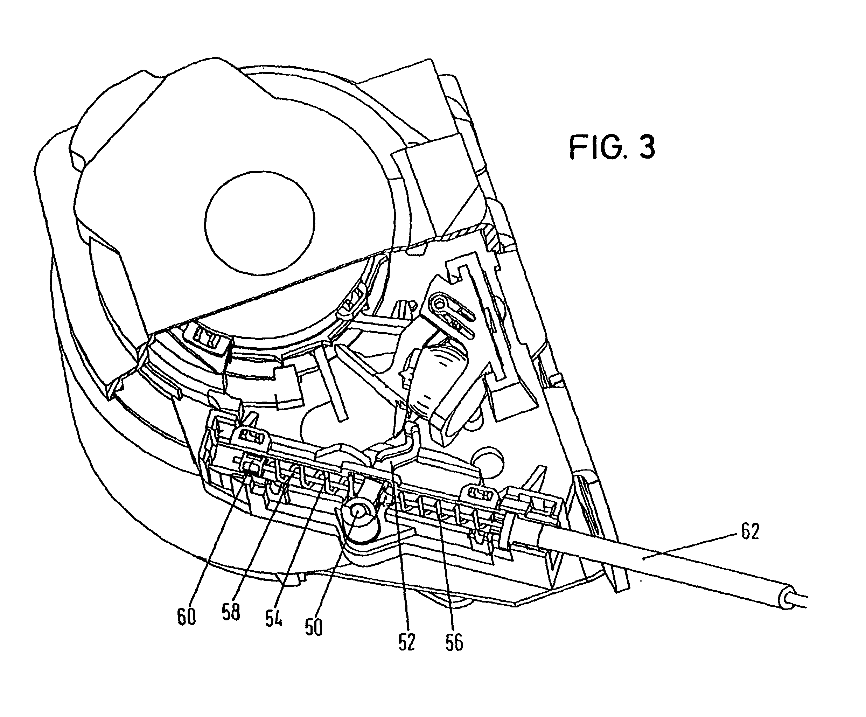

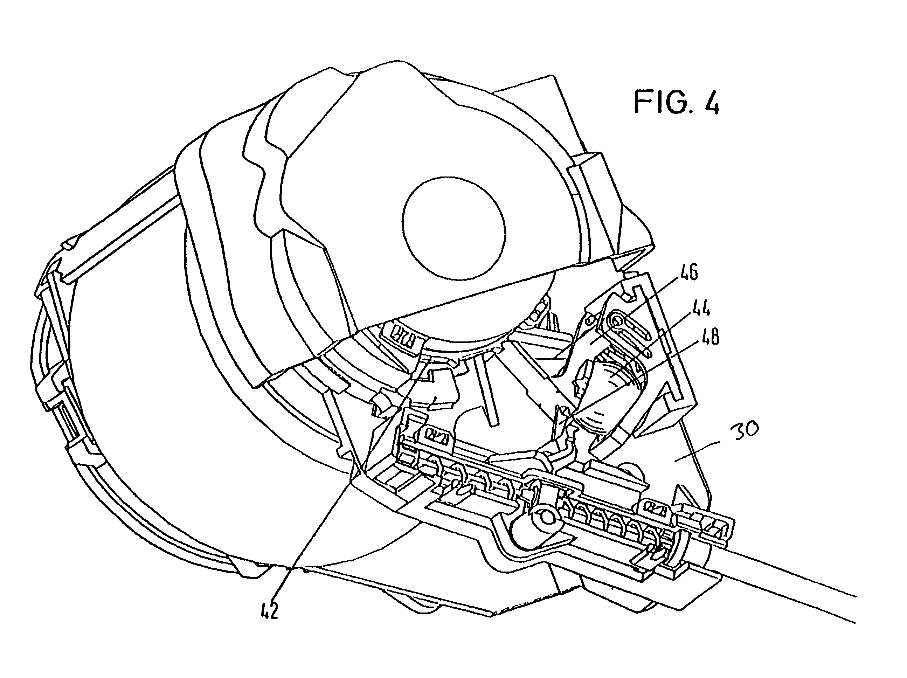

Bei der in Figur 3 gezeigten Normalstellung ist die Schloßfalle 20 eingerastet und das Zugseil 58 unter Spannung, wodurch der Betätigungshebel 52 über die Druckfeder 54 in eine Stellung verschwenkt wird, bei der sein freies Ende von dem Steueransatz 48 der Kupplungsklinke 46 beabstandet ist. Wenn die Schloßfalle 20 nicht oder nicht vollständig eingerastet ist, wird der Betätigungshebel 52 über die Druckfeder 56 gegen den Steueransatz 48 gedrückt, wie in Figur 4 gezeigt, wodurch die Kupplungsklinke 46 angehoben und in die Kupplungsverzahnung am Umfang der Kupplungsscheibe 42 eingesteuert wird. Wird nun Gurtband von der Gurtspule abgezogen, erfolgt die Aktivierung des Blockiermechanismus in gleicher Weise wie bei fahrzeugsensitiver Auslösung.

## Patentansprüche

1. Gurtaufroller (12) zum Einbau in eine umlegbare Rückenlehne (14), die am Fahrzeugaufbau in aufrechter Gebrauchsposition durch ein Schloß (18, 20) verriegelbar ist, mit einer in einem Rahmen (30) drehbar gelagerten Gurtspule (32) und einem Blockiermechanismus (34, 36) zur selektiven, drehfesten Blockierung der Gurtspule (32) am Rahmen (30), wobei der Blockiermechanismus (34, 36) aktiviert ist, solange die Rückenlehne (14) nicht durch Einrasten des Schlosses (18, 20) verriegelt ist, und der Blockiermechanismus (34, 36) eine fahrzeugsensitive Ansteuereinrichtung mit einer an der Gurtspule angeschlossenen Kupplungsscheibe (42), die eine Kupplungsverzahnung aufweist, und einer in die Kupplungsverzahnung einsteuerbaren Kupplungsklinke (46) aufweist, **dadurch gekennzeichnet, daß** das Schloß (18, 20) im Bereich eines Drehgelenks (16) zwischen der Rückenlehne (14) und dem Sitzteil des Fahrzeugsitzes (10) angeordnet ist und die Kupplungsklinke (46) einen Steueransatz (48) aufweist, der in einem Bereich der Kupplungsklinke (46) gebildet ist, der dem Eingriffsbereich der Kupplungsklinke (46) mit der Kupplungsverzahnung entgegengesetzt und außer Eingriff mit der Kupplungsverzahnung ist, wobei der Steueransatz (48) durch ein Zugmittel (26) mit dem Schloß (18, 20) gekoppelt ist.

2. Gurtaufroller nach Anspruch 1, **dadurch gekennzeichnet, daß** durch das Zugmittel (26) ein auf den Steueransatz (48) der Kupplungsklinke (46) einwirkender Betätigungshebel (52) verschwenkt wird.

3. Gurtaufroller nach Anspruch 2, **dadurch gekennzeichnet, daß** der Betätigungshebel (52) zwischen zwei Druckfedern (54, 56) angeordnet ist, von denen die erste (54) an einem auf dem freien Ende des Zugmittels (26) befestigten Endstück (60) und die zweite (56) an einem das Zugmittel (26) umgebenden Mantel (62) abgestützt ist.

## Claims

1. A belt retractor (12) for installation in a fold-down type backrest (14) which can be latched to the vehicle body in the upright seating position by a lock (18, 20), comprising a belt reel (32) rotatably mounted in a frame (30) and a blocking mechanism (34, 36) for selectively blocking rotation of the belt reel (32) on the frame (30), the blocking mechanism (34, 36) being activated as long as the backrest (14) is not locked in place by latching action of the lock (18, 20), and the blocking mechanism (34, 36) including a vehicle-sensitive activating means having a coupling disk (42) which is connected to the belt reel and has a coupling toothing, and a coupling pawl (46) which can be caused to engage the coupling toothing, **characterized in that** the lock (18, 20) is arranged in the region of a rotary joint (16) between the backrest (14) and the seat part of the vehicle seat (10), and the coupling pawl (46) has a control projection (48) formed in a portion of the coupling pawl (46) which is opposed to the portion of engagement of the coupling pawl (46) with the coupling toothing and out of engagement with the coupling toothing, the control projection (48) being coupled to the lock (18, 20) by a traction means (26).

2. The belt retractor as set forth in claim 1, **characterized in that** an actuating lever (52) acting on the control projection (48) of the coupling pawl (46) is swivelled by the traction means (26).

3. The belt retractor as set forth in claim 2, **characterized in that** the actuating lever (52) is disposed between two compression springs (54, 56), the first (54) of which is supported by an end part (60) secured to the free end of the traction means (26) and the second (56) is supported by a sleeve (62) surrounding the traction means (26).

## Revendications

1. Enrouleur de ceinture (12) destiné à être monté dans un dossier (14) rabattable qui peut être verrouillé sur la structure d'un véhicule en position d'utilisation verticale au moyen d'une serrure (18, 20), comportant une bobine de ceinture (32) montée rotative sur un cadre (30) et un mécanisme de blocage (34, 36) pour bloquer de manière sélective et solidaire en rotation la bobine de ceinture (32) sur le cadre (30), le mécanisme de blocage (34, 36) étant activé tant que le dossier (14) n'est pas verrouillé par enclenchement de la serrure (18, 20), et le mécanisme de blocage (34, 36) présentant un dispositif de pilotage sensible aux mouvements du véhicule avec un disque d'accouplement (42) raccordé à la bobine de ceinture, qui présente une denture d'accouplement, et avec un cliquet d'accouplement (46) qui peut être engagé dans la denture d'accouplement, **caractérisé en ce que** la serrure (18, 20) est agencée dans la région d'une articulation rotative (16) entre le dossier (14) et la partie assise du siège de véhicule (10) et le cliquet d'accouplement (46) présente un téton de commande (48) qui est formé dans une zone du cliquet d'accouplement (46), qui est opposée à la zone d'engagement du cliquet d'accouplement (46) avec la denture d'accouplement et qui est hors d'engagement avec la denture d'accouplement, le téton de commande (48) étant accouplé à la serrure (18, 20) par un moyen de traction (26).

2. Enrouleur de ceinture selon la revendication 1, **caractérisé en ce qu'**un levier d'actionnement (52) agissant sur le téton de commande (48) du cliquet d'accouplement (46) est pivoté par le moyen de traction (26).

3. Enrouleur de ceinture selon la revendication 2, **caractérisé en ce que** le levier d'actionnement (52) est agencé entre deux ressorts de compression (54, 56) dont le premier (54) prend appui sur une pièce d'extrémité (60) fixée sur l'extrémité libre du moyen de traction (26) et le deuxième (56) prend appui sur une enveloppe (62) entourant le moyen de traction (26).
